(19) Europäisches Patentamt
European Patent Office
Office européen des brevets

(11) **EP 3 133 532 A1**

(12) **EUROPEAN PATENT APPLICATION**

(43) Date of publication:
**22.02.2017 Bulletin 2017/08**

(51) Int Cl.:
***G06K 9/62*** *(2006.01)*     ***G06K 9/00*** *(2006.01)*

(21) Application number: **16182001.4**

(22) Date of filing: **29.07.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **19.08.2015  CN 201510511468**

(71) Applicant: **Xiaomi Inc.**
**Beijing 100085 (CN)**

(72) Inventors:
• **WANG, Pingze**
  **BEIJING, 100085 (CN)**
• **LONG, Fei**
  **BEIJING, 100085 (CN)**
• **ZHANG, Tao**
  **BEIJING, 100085 (CN)**

(74) Representative: **Fontenelle, Sandrine et al**
**Cabinet Beau de Loménie**
**158, rue de l'Université**
**75340 Paris Cedex 07 (FR)**

(54) **METHOD AND DEVICE FOR TRAINING CLASSIFIER AND RECOGNIZING A TYPE OF INFORMATION**

(57)    Method and Device for training classifier and for recognizing a type of information are provided in the invention, which belong to natural language processing field. The method for training the classifier includes extracting (101) a sample clause including a target keyword from sample information; performing (102) binary labeling on the sample clause to obtain sample training set based on whether each sample clause belongs to target class; performing (103) word segmentation on each sample clause in the sample training set to obtain a plurality of words; extracting (104) a specified characteristic set from the plurality of words, the specified characteristic set including at least one characteristic words; constructing (105) a classifier based on the characteristic words in the specified characteristic set; training (106) the classifier based on results of the binary labeling in the sample training set.

sample clauses including a target keyword are extracted from sample information — 101

a binary labeling is performed on the sample clause to obtain sample training set based on whether each sample clause belongs to target class — 102

word segmentation is performed on each sample clause in the sample training set to obtain a plurality of words — 103

a specified characteristic set is extracted from the plurality of words, wherein the specified characteristic set includes at least one characteristic words — 104

a classifier is constructed based on the characteristic words in the specified characteristic set — 105

the classifier is trained based on results of the binary labeling in the sample training set — 106

**FIG. 1**

**Description**

**TECHNICAL FIELD**

The present invention generally relates to natural language processing field, and more particularly to a method and a device for training a classifier and recognizing a type of information.

**BACKGROUND**

Short message content recognition and extraction is a practical application of natural language processing.

Using birthday short message recognition as an example, a recognition method is provided in related art. The mobile recognition method includes presetting a plurality of keywords; recognizing short message contents to determine whether the contents include all or part of keywords; and determining whether the short message is a message including a birth date.

**SUMMARY**

In view of the fact in related arts that it is not accurate to use keywords to make type recognition, a method and a device for training a classifier and recognizing a type of information are provided in the invention.

According to a first aspect of the present invention, a classifier training method is provided. The method includes: extracting a sample clause including a target keyword from sample information; performing binary labeling on the sample clause to obtain sample training set based on whether each sample clause belongs to target class; performing word segmentation on each sample clause in the sample training set to obtain a plurality of words; extracting a specified characteristic set from the plurality of words, the specified characteristic set including at least one characteristic word; constructing a classifier based on the characteristic words in the specified characteristic set; training the classifier based on results of the binary labeling in the sample training set.

In an exemplary embodiment, extracting the specified characteristic set from the plurality of words includes: extracting the specified characteristic set from the plurality of words based on a chi-square test; or extracting the specified characteristic set from the plurality of words based on information gain.

In an exemplary embodiment, constructing a classifier based on the characteristic words in the specified characteristic set includes constructing a Naive Bayes classifier with the characteristic words in the specified characteristic set, wherein the characteristic words are independent of each other.

In an exemplary embodiment, training the classifier based on the results of the binary labeling in the sample training set includes: for each characteristic word in the Naive Bayes classifier, calculating a first conditional probability that the sample clauses including the characteristic word belong to the target class and a second conditional probability that the sample clauses including the characteristic word do not belong to the target class based on the results of the binary labeling in the sample training set; obtaining the trained Naive Bayes classifier based on each characteristic word, the first conditional probability and the second conditional probability.

According to a second aspect of the present invention, a recognition method of a type of information is provided. The method includes: extracting clauses including a target keyword from original information; generating a characteristic set of the original information based on characteristic words in the extracted clauses which belong to the characteristic set, wherein the characteristic words in the specified characteristic set are extracted based on results of performing word segmentation on the sample clause including a target keyword; inputting the characteristic set of the original information into a trained classifier for prediction, wherein the classifier is pre-constructed based on the characteristic words in the specified characteristic set; obtaining a prediction result of the classifier which represents whether the original information belongs to a target class.

In an exemplary embodiment, inputting the characteristic set of the original information into the trained classifier for prediction includes: calculating a first prediction probability that the original information belongs to the target class and a second prediction probability that the original information does not belong to the target class by inputting each characteristic word in the characteristic set of the original information into a trained Naive Bayes classifier; predicting whether the original information belongs to the target class based on a numeric value relationship between the first prediction probability and the second prediction probability; wherein the trained Naive Bayes classifier includes the first conditional probability and the second conditional probability of each characteristic word, the first conditional probability is a probability that the clauses including the characteristic word belong to the target class and the second conditional probability is a probability that the clauses including the characteristic word do not belong to the target class.

In an exemplary embodiment, the method further includes extracting target information from the original information when it is predicted that the original information belongs to the target class.

In an exemplary embodiment, the target information is a birth date, and extracting the target information from the original information includes: extracting the birth date from the original information via a regular expression; or extracting the date of receiving the original information as the birth date.

According to a third aspect of the present invention, a device for training a classifier is provided, the device includes: a clause extraction module configured to extract a sample clause including a target keyword from sample information; a clause labeling module configured to perform binary labeling on the sample clause to obtain sample training set based on whether each sample clause belongs to target class; a clause word segmentation module configured to perform word segmentation on each sample clause in the sample training set to obtain a plurality of words; a characteristic word extraction module configured to extract a specified characteristic set from the plurality of words, wherein the specified characteristic set includes at least one characteristic words; a classifier construction module configured to construct a classifier based on the characteristic words in the specified characteristic set; a classifier training module configured to train the classifier based on results of the binary labeling in the sample training set.

In an exemplary embodiment, the characteristic word extraction module is configured to extract the specified characteristic set from the plurality of words based on a chi-square test; or the characteristic word extraction module is configured to extract the specified characteristic set from the plurality of words based on information gain.

In an exemplary embodiment, the classifier construction module is configured to construct a Naive Bayes classifier with the characteristic words in the specified characteristic set, wherein the characteristic words are independent of each other in the Naive Bayes classifier.

In an exemplary embodiment, the classifier training module includes: a calculation submodule configured to calculate a first conditional probability that the sample clauses including the characteristic word belong to the target class and a second conditional probability that the sample clauses including the characteristic word do not belong to the target class for each characteristic word in the Naive Bayes classifier based on the results of the binary labeling in the sample training set; a training submodule configured to obtain the trained Naive Bayes classifier based on each characteristic word, the first conditional probability and the second conditional probability.

According to a fourth aspect of the present invention, a device for recognizing a type of information is provided. The device includes: an original extraction module configured to extract clauses including a target keyword from original information; a characteristic extraction module configured to generate a characteristic set of the original information based on characteristic words in the extracted clauses which belong to the characteristic set, wherein the characteristic words in the specified characteristic set are extracted based on results of performing word segmentation on the sample clause including a target keyword; a characteristic input module configured to input the characteristic set of the original information into the trained classifier for prediction, wherein the classifier is pre-constructed based on the characteristic words in the specified characteristic set; a result obtaining module configured to obtain a prediction result of the classifier which represents whether the original information belongs to a target class.

In an exemplary embodiment, the characteristic input module includes: a calculation submodule configured to calculate a first prediction probability that the original information belongs to the target class and a second prediction probability that the original information does not belong to the target class by inputting each characteristic word in the characteristic set of the original information into a trained Naive Bayes classifier; a prediction submodule configured to predict whether the original information belongs to the target class based on a numeric value relationship between the first prediction probability and the second prediction probability; wherein the trained Naive Bayes classifier includes the first conditional probability and the second conditional probability of each characteristic word, the first conditional probability is a probability that the clauses including the characteristic word belong to the target class and the second conditional probability is a probability that the clauses including the characteristic word do not belong to the target class.

In an exemplary embodiment, the device further includes an information extraction module configured to extract target information from the original information when it is predicted that the original information belongs to the target class. In an exemplary embodiment, the target information is a birth date, the information extraction module is configured to extract the birth date from the original information via a regular expression; or the information extraction module is configured to extract the date of receiving the original information as the birth date.

According to a fifth aspect of the present invention, a device for training a classifier is provided. The device includes: a processor; and a memory for storing processor-executable instructions, wherein the processor is configured to: extract a sample clause including a target keyword from sample information; perform binary labeling on the sample clause to obtain sample training set based on whether each sample clause belongs to target class; perform word segmentation on each sample clause in the sample training set to obtain a plurality of words; extract a specified characteristic set from the plurality of words, the specified characteristic set including at least one characteristic words; construct a classifier based on the characteristic words in the specified characteristic set; train the classifier based on results of the binary labeling in the sample training set.

According to a sixth aspect of the present invention, a device for recognizing a type of information is provided. The device includes: a processor; and a memory for storing processor-executable instructions, wherein the processor is configured to: extract clauses including a target keyword from original information; generate a characteristic set of the original information based on characteristic words in the extracted clauses which belong to the characteristic set, wherein the characteristic words in the specified characteristic set are extracted based on results of performing word segmentation on the sample clause including a target keyword; input the characteristic set of the original information into the trained classifier for prediction, wherein the classifier is pre-constructed based on the characteristic words in the specified characteristic set; obtain a prediction result of the classifier which represents whether the original information belongs to a target class.

Embodiments of the invention may provide at least some of the following beneficial effects: by performing word segmentation on each sample clause in the sample training set to obtain a plurality of words, extracting a specified characteristic set from the plurality of words, and constructing a classifier based on the characteristic words in the specified characteristic set, it can solve the problem in related arts that the recognition result is not accurate when merely the birthday keyword is used to make short message class analysis. Since the characteristic words in the specified characteristic set are extracted by performing word segmentation on the sample clause including the target keyword, the classifier can accurately predict the clause including the target keyword, and thereby to achieve accurate recognition results.

It should be understood that both the forgoing general description and the following detailed description are exemplary only, and are not restrictive of the present invention.

BRIEF DESCRIPTION OF THE DRAWINGS

The accompanying drawings, which are incorporated in and constitute a part of this specification, illustrate embodiments consistent with the invention and, together with the description, serve to explain the principles of the invention.

Fig. 1 is a flow diagram illustrating a method for training a classifier according to an exemplary embodiment.
Fig. 2 is a flow diagram illustrating a method for training a classifier according to another exemplary embodiment.
Fig. 3 is a flow diagram illustrating a method for recognizing a type of information according to an exemplary embodiment.
Fig. 4 is a flow diagram illustrating a method for recognizing a type of information according to another exemplary embodiment.
Fig. 5 is a block diagram illustrating a device for training a classifier according to an exemplary embodiment.
Fig. 6 is a block diagram illustrating a device for training a classifier according to another exemplary embodiment.
Fig. 7 is a block diagram illustrating a device for recognizing a type of information according to an exemplary embodiment.
Fig. 8 is a block diagram illustrating a device for recognizing a type of information according to another exemplary embodiment.
Fig. 9 is a block diagram illustrating a device for training a classifier or a device for recognizing a type of information according to an exemplary embodiment.

DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of devices and methods consistent with aspects related to the invention as recited in the appended claims.

Due to diversity and complexity of a natural language expression, it is not accurate to directly use target keyword to make recognition of a type of information (e.g. information comprised in a message). For example, the short message including target keyword "birthday" or "born" are as followed:

short message 1: "Xiaomin, tomorrow is not his birthday, please do not buy a cake."
short message 2: "Darling, is today your birthday?"
short message 3: "My son was born in last year's today."
short message 4: "The baby who was born on May 20 has a good luck."

In above four short messages, only the third short message is a short message including a valid birth date, none of the other three short messages is a short message including a valid birth date.

For accurately recognizing the type of the short message (different types of short messages are for example a birthday message, a bank notification message, a message comprising harassing information, etc.), the embodiment of the invention provides a recognition method based on a classifier. The recognition method includes two stages: a first stage of training a classifier and a second stage of using the classifier to make type recognition.

The following different embodiments are used to set forth the above two stages. First stage of training a classifier

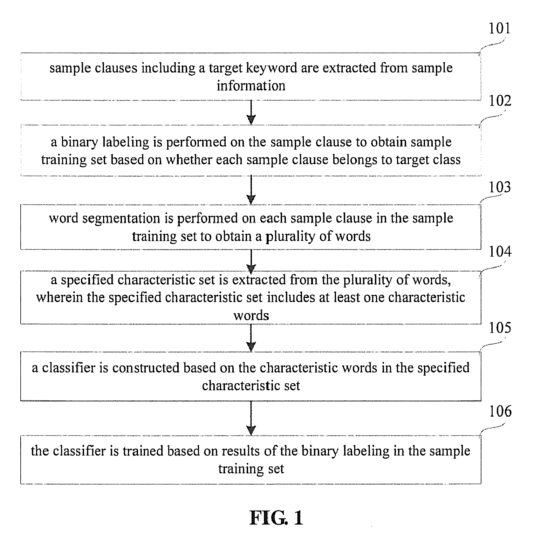

Fig. 1 is a flow diagram illustrating a method for training a classifier according to an exemplary embodiment. The method may include the following steps.

In step 101, a sample clause including a target keyword is extracted from sample information.

The sample information may be alternatively any of a short message, a mail, a microblog or instant messaging information. The embodiments of the invention do not limit the classes of the sample information.

Each sample information may include at least one clause, wherein the clause including a target keyword is a sample clause.

In step 102, a binary labeling is performed on the sample clause to obtain sample training set based on whether each sample clause belongs to target class.

In step 103, word segmentation is performed on each sample clause in the sample training set to obtain a plurality of words.

In step 104, a specified characteristic set is extracted from the plurality of words, wherein the specified characteristic set includes at least one characteristic word.

In step 105, a classifier is constructed based on the characteristic words in the specified characteristic set.

In one embodiment, the classifier is a Naive Bayes classifier.

In step 106, the classifier is trained based on results of the binary labeling in the sample training set.

In summary, in the method for training the classifier according to the embodiment of the invention, by performing word segmentation on each sample clause in the sample training set to obtain a plurality of words, extracting a specified characteristic set from the plurality of words, and constructing a classifier based on the characteristic words in the specified characteristic set, it can solve the problem in related arts that the recognition result is not accurate when merely the birthday keyword is used to make short message class analysis. Since the characteristic words in the specified characteristic set are extracted by performing word segmentation on the sample clause including the target keyword, the classifier can accurately predict the clause including the target keyword, and thereby to achieve accurate recognition results.

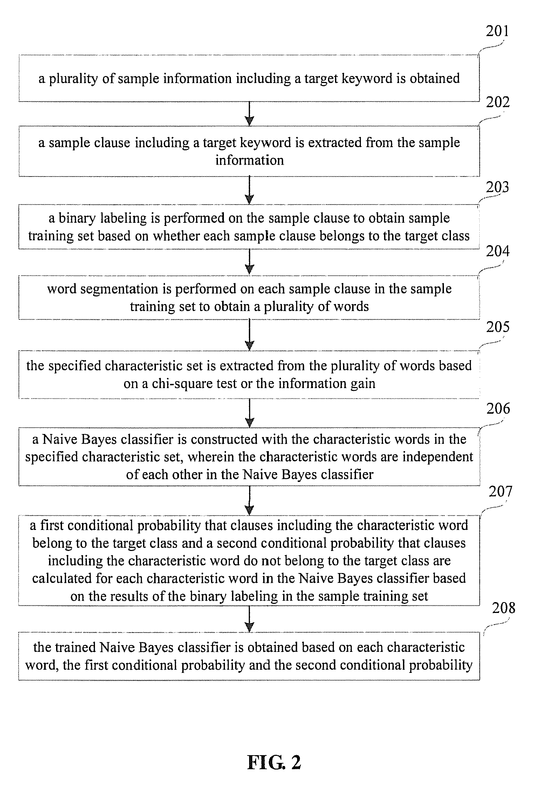

Fig. 2 is a flow diagram illustrating a method for training a classifier according to another exemplary embodiment. The method may include the following steps.

In step 201, a plurality of sample information including a target keyword is obtained. The target keyword is related to a target class. For example, when the target class is information including a valid birth date, the target keywords may include "birthday" and "born".

The more the sample information including a target keyword is, the more accurate the trained classifier. When the class of sample information is a short message, for example, the sample information may include:

sample short message 1: "Xiaomin, tomorrow is not his birthday, please do not buy a cake."
sample short message 2: "Darling, is today your birthday?"
sample short message 3: "My son was born in last year's today."
sample short message 4: "The baby who was born on May 20 has a good luck."
sample short message 5: "The day, on which my son was born, is April Fool's Day." ....and so on, which are not listed herein.

In step 202, a sample clause including a target keyword is extracted from the sample information.

Each sample information may include at least one clause. The clause refers to a sentence that does not include any punctuation. For example,

sample clause 1 extracted from the sample short message 1: "tomorrow is not his birthday"
sample clause 2 extracted from the sample short message 2: "is today your birthday"
sample clause 3 extracted from the sample short message 3: "My son was born in last year's today."
sample clause 4 extracted from the sample short message 4: "The baby who was born on May 20 has a good luck."
sample clause 5 extracted from the sample short message 5: "on which my son was born"

In step 203, a binary labeling is performed on the sample clause to obtain sample training set based on whether each sample clause belongs to the target class.

In one embodiment, the binary labeling value is 1 or 0; when the sample clause belongs to the target class, it is labeled with 1; when the sample clause does not belong to the target class, it is labeled with 0.

For example, when the target class is information including a valid birth date, the sample clause 1 is labeled with 0, the sample clause 2 is labeled with 0, the sample clause 3 is labeled with 1, the sample clause 4 is labeled with 0, and the sample clause 5 is labeled with 1.

The sample training set may include a plurality of sample clauses.

In step 204, word segmentation is performed on each sample clause in the sample training set to obtain a plurality of words.

For example, the word segmentation is performed on the sample clause 1 to obtain five words of "tomorrow "is" "not" "his" and "birthday"; the word segmentation is performed on the sample clause 2 to obtain five words of, "is" "today" "your" and "birthday"; the word segmentation is performed on the sample clause 3 to obtain eight words of "my", "son", "was", "born", "in", "last", "year's", and "today"; the word segmentation is performed on the sample clause 4 to obtain twelve words of "the", "baby", "who", "was", "born", "on", "May", "20", "has", "a", "good" and "luck"; the word segmentation is performed on the sample clause 5 to obtain twelve words of "on", "which", "my", "son", "was", "born".

That is, the plurality of words may include "tomorrow", "is", "not", "his", "birthday", "is", "today", "your", "my", "son", "was", "born", "in", "last", "year's", "the", "baby", "who" "on", "May", "20th", "has", "a", "good" and "luck", "which", and so on.

In step 205, the specified characteristic set is extracted from the plurality of words based on a chi-square test or the information gain.

In the plurality of words obtained by performing word segmentation, some words have more importance, and some words have less importance, therefore, not all words are suitable for being used as a characteristic word. Two different ways may be used to extract the characteristic word.

First way: the characteristic words, of which the relevance in relation to the target class is ranked in top n, are extracted from the plurality of words based on the chi-square test to form the specified characteristic set F.

The chi-square test can test the relevance of each word and the target class. The higher the relevance is, the more suitable it is used as the characteristic word corresponding to the target class.

For example, a method for extracting the characteristic word based on the chi-square test includes the following steps:

1.1. a total number N of the sample clauses in the sample training set is calculated;

1.2. a frequency A with which each word appears in a sample clause belonging to the target class is calculated; a frequency B with which each word appears in a sample clause not belonging to the target class is calculated; a frequency C with which each word does not appear in the sample clause belonging to the target class is calculated; a frequency D with which each word does not appear in the sample clause not belonging to the target class is calculated;

1.3. the chi-square value of each word is calculated as followed:

$$\chi^2 = \frac{N(AD-BC)^2}{(A+C)(A+B)(B+D)(B+C)}$$

1.4. each word is ranked based on respective chi-square value from big to small, and the top n of words are selected as the characteristic words.

According to a second way, the characteristic words, for which the information gain value is ranked in top n, are extracted from the plurality of words based on the information gain to form the specified characteristic set F.

The information gain refers to amount of information of the word relative to the sample training set. The more the word has the amount of information, the more suitable the word is used as a characteristic word.

For example, a method for extracting a characteristic word based on the information gain includes the following steps:

2.1. a number N1 of the sample clauses belonging to the target class is calculated; and a number N2 of the sample clauses not belonging to the target class is calculated;

2.2. a frequency A with which each word appears in the sample clause belonging to the target class is calculated; a frequency B with which each word appears in the sample clause not belonging to the target class is calculated; a frequency C with which each word does not appear in the sample clause belonging to the target class is calculated; a frequency D with which each word does not appear in the sample clause not belonging to the target class is calculated;

2.3. the information entropy is calculated as followed:

$$Entropy(S) = -\left(\frac{N1}{N1+N2}\log\frac{N1}{N1+N2} + \frac{N2}{N1+N2}\log\frac{N2}{N1+N2}\right)$$

2.4. the information gain value of each word is calculated as followed:

$$\text{InfoGain} = Entropy(S) + \frac{A+B}{N1+N2}\left(\frac{A}{A+B}\log\left(\frac{A}{A+B}\right) + \frac{B}{A+B}\log\left(\frac{B}{A+B}\right)\right)$$
$$+ \frac{C+D}{N1+N2}\left(\frac{C}{C+D}\log\left(\frac{C}{C+D}\right) + \frac{D}{C+D}\log\left(\frac{D}{C+D}\right)\right)$$

2.5. each word is ranked based on the information gain value from big to small, and the top n words are selected as the characteristic words.

In step 206, a Naive Bayes classifier is constructed with the characteristic words in the specified characteristic set, wherein the characteristic words are independent of each other in the Naive Bayes classifier.

The Naive Bayes classifier is a classifier that performs prediction based on a first conditional probability and a second conditional probability of each characteristic word. For any characteristic word, the first conditional probability is a probability that the sample clauses including the characteristic word belong to the target class, and the second conditional probability is a probability that the sample clauses including the characteristic word do not belong to the target class.

In the procedure of training the Naive Bayes classifier, it is needed to calculate the first conditional probability and the second conditional probability of each characteristic word based on the sample training set.

For example, there are 100 sample clauses including the characteristic word "today", wherein 73 sample clauses belong to the target class, and 27 sample clauses do not belong to the target class. Then the first conditional probability of the characteristic "today" is 0.73, and the second conditional probability of the characteristic "today" is 0.27.

In step 207, a first conditional probability that the sample clauses including the characteristic word belong to the target class and a second conditional probability that the sample clauses including the characteristic word do not belong to the target class are calculated for each characteristic word in the Naive Bayes classifier based on the results of the binary labeling in the sample training set.

In step 208, the trained Naive Bayes classifier is obtained based on each characteristic word, the first conditional probability and the second conditional probability.

In summary, in the method for training the classifier according to the embodiment of the invention, by performing word segmentation on each sample clause in the sample training set to obtain a plurality of words, extracting a specified characteristic set from the plurality of words, and constructing a classifier based on the characteristic words in the specified characteristic set, it can solve the problem in related arts that the recognition result is not accurate when merely the birthday keyword is used to make short message class analysis. Since the characteristic words in the specified characteristic set are extracted by performing word segmentation on the sample clause including the target keyword, the classifier can accurately predict the clause including the target keyword, and thereby to achieve accurate recognition results.

In the embodiment, the characteristic words are extracted from each sample clause of the sample training set based on the chi-square test or the information gain, and the characteristic words that have better effect to classification accuracy can be extracted, thereby to improve the classification accuracy of the Naive Bayes classifier.

Second stage of using a classifier to make recognition of a type of information

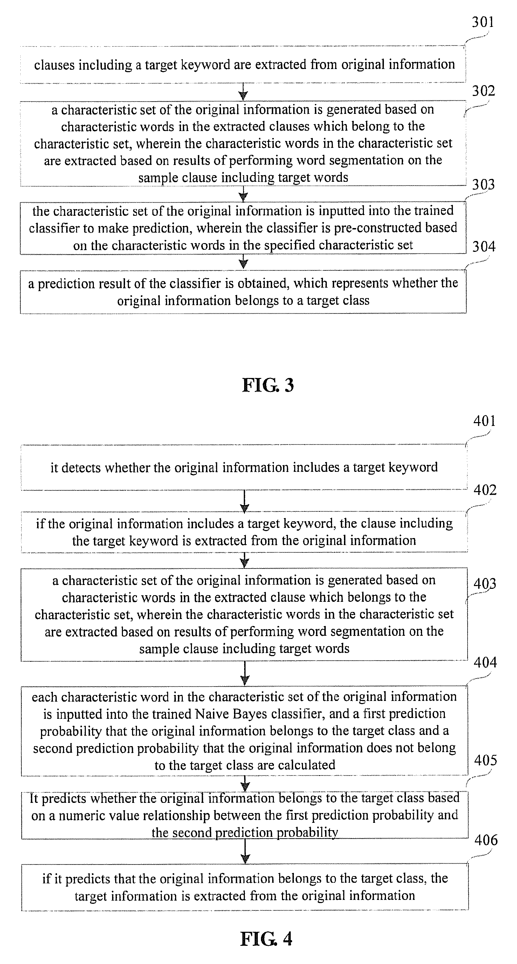

Fig. 3 is a flow diagram illustrating a method for recognizing a type of information according to an exemplary embodiment. The recognition method uses the trained classifier obtained in the embodiments of Fig. 1 or Fig. 2. The method may include the following steps.

In step 301, a sample clause including a target keyword is extracted from original information.

The original information may be any of a short message, a mail, a microblog or instant messaging information. The embodiments of the invention do not limit the classes of the sample information. Each original information may include at least one clause.

In step 302, a characteristic set of the original information is generated based on characteristic words in the extracted clauses which belong to the characteristic set, wherein the characteristic words in the specified characteristic set are extracted based on results of performing word segmentation on the sample clause including target keywords.

In step 303, the characteristic set of the original information is inputted into the trained classifier for prediction, wherein the classifier is pre-constructed based on the characteristic words in the specified characteristic set.

In one embodiment, the classifier is a Naive Bayes classifier.

In step 304, a prediction result of the classifier is obtained, which represents whether the original information belongs to a target class.

In summary, in the recognition method according to the embodiment of the invention, by extracting the characteristic words from the clauses based on a specified characteristic set to be used as the characteristic set of original information, then inputting the characteristic set into the trained classifier for prediction, wherein the classifier is pre-constructed based on the characteristic words in the specified characteristic set, it can solve the problem in related arts that the recognition result is not accurate when merely the birthday keyword is used to make short message class analysis. Since the characteristic words in the specified characteristic set are extracted by performing word segmentation on the sample clause including the target keyword, the classifier can accurately predict the clause including the target keyword, and thereby to achieve accurate recognition results.

Fig. 4 is a flow diagram illustrating a method for recognizing a type of information according to another exemplary embodiment. The recognition method uses the trained classifier obtained in the embodiments of Fig. 1 or Fig. 2. The method may include the following steps.

In step 401, it detects whether the original information includes a target keyword. The original information may be a short message, for example, the original information is "my birthday is on July 28, today is not my birthday!".

The target keyword is related to a target class. For example, when the target class is information including a valid birth date, the target keywords include "birthday" and "born". It detects whether the original information includes a target keyword. If yes, the procedure proceeds to step 402; otherwise, the procedure is stopped.

In step 402, if the original information includes a target keyword, the clause including the target keyword is extracted from the original information.

For example, if the original information includes a target keyword "birthday", the clause "my birthday is on July 28" is extracted from the original information.

In step 403, a characteristic set of the original information is generated based on characteristic words in the extracted clauses which belong to the characteristic set, wherein the characteristic words in the specified characteristic set are extracted based on results of performing word segmentation on the sample clause including target keywords.

For example, the specified characteristic set may include "tomorrow", "is" "not", "his", "birthday", "is", "today", "your", "my", "son", "was", "born", "in", "last", "years", "the", "baby", and so on.

The characteristic words of the clause "my birthday is on July 28" that belong to the specified characteristic set include "my", "birthday" and "is". The three words of "my", "birthday" and "is" are used as a characteristic set of the original information.

In step 404, each characteristic word in the characteristic set of the original information is inputted into the trained Naive Bayes classifier, and a first prediction probability that the original information belongs to the target class and a second prediction probability that the original information does not belong to the target class are calculated.

The trained Naive Bayes classifier includes the first conditional probability and the second conditional probability of each characteristic word, the first conditional probability is a probability that the clauses including the characteristic word belong to the target class and the second conditional probability is a probability that the clauses including the characteristic word do not belong to the target class.

The first prediction probability of the original information is equal to the product of the first conditional probability of each characteristic word in the characteristic set of original information.

For example, when the first conditional probability of "my" is 0.3, the first conditional probability of "birthday" is 0.65, the first conditional probability of "is" is 0.7, the first prediction probability of the original information is equal to $0.3 \times 0.65 \times 0.7 = 0.11375$.

The second prediction probability of the original information is equal to the product of the second conditional probability of each characteristic word in the characteristic set of original information.

For example, when the second conditional probability of "my" is 0.2, the second conditional probability of "birthday" is 0.35, the second conditional probability of "is" is 0.3, the second prediction probability of the original information is equal to $0.2 \times 0.35 \times 0.3 = 0.021$.

In step 405, it predicts whether the original information belongs to the target class based on a numeric value relationship between the first prediction probability and the second prediction probability.

When the first prediction probability is larger than the second prediction probability, the prediction result is that the original information belongs to the target class.

For example, 0.11375 is larger than 0.021, therefore, the original information belongs to the target class, that is, the original information includes a valid birth date.

When the second prediction probability is larger than the first prediction probability the prediction result is that the original information does not belong to the target class.

In step 406, if it predicts that the original information belongs to the target class, the target information is extracted from the original information.

The step can use any of the following implementation manners.

First, the birth date is extracted from the original information via a regular expression. As it is well known from the person skilled in the art, a regular expression is a sequence of characters that define a search pattern. Further details on regular expressions are provided for example on https://en.wikipedia.org/wiki/Regular_expression.

Second, the date of receiving the original information is extracted as the birth date.

Third, it attempts to extract the birth date from the original information via the regular expression. If the birth date cannot be extracted via the regular expression, the date of receiving the original information is extracted as the birth date.

In summary, in the recognition method according to the embodiment of the invention, by extracting the characteristic words from the clauses based on a specified characteristic set to be used as the characteristic set of original information, then inputting the characteristic set into the trained classifier for prediction, wherein the classifier is pre-constructed based on the characteristic words in the specified characteristic set, it can solve the problem in related arts that the recognition result is not accurate when merely the birthday keyword is used to make short message class analysis. Since the characteristic words in the specified characteristic set are extracted by performing word segmentation on the sample clause including the target keyword, the classifier can accurately predict the clause including the target keyword, and thereby to achieve accurate recognition results.

The recognition method provided by the embodiment further includes: after predicting that the original information belongs to the target class, extracting the target information from the original information, and implementing the extraction of the target information, such as the birth date, the travel date, to provide data support for subsequently automatically generating reminders, calendar tag and so on.

It should be noted that the foregoing embodiments use the target class that is information including a valid birth date as an example, but the application of the forgoing method is not limited to the single target class. The target class also may information including a valid travel date, information including a valid holiday date, and so on.

The following embodiment of the invention provide a device, which can perform the method of the invention. For the details which are not disclosed in the device embodiments of the invention, please refer to the method embodiments of the invention.

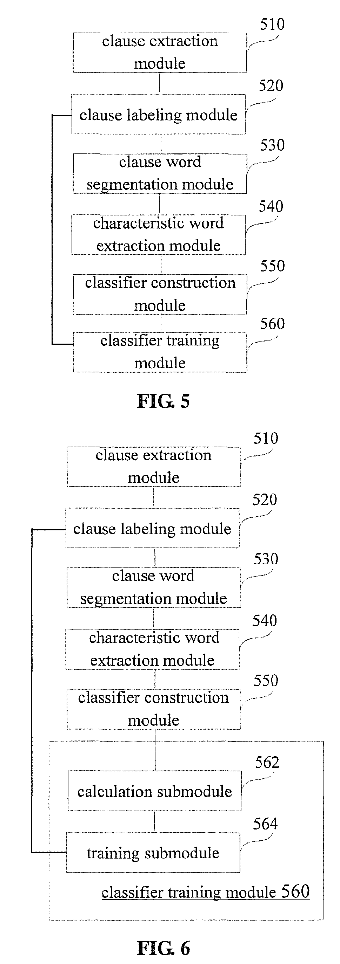

Fig. 5 is a block diagram illustrating a device for training a classifier according to an exemplary embodiment. As shown in Fig. 5, the device for training the classifier includes but not limited to: a clause extraction module 510 configured to extract a sample clause including a target keyword from sample information; a clause labeling module 520 configured to perform binary labeling on the sample clause to obtain sample training set based on whether each sample clause belongs to target class; a clause word segmentation module 530 configured to perform word segmentation on each sample clause in the sample training set to obtain a plurality of words; a characteristic word extraction module 540 configured to extract a specified characteristic set from the plurality of words, wherein the specified characteristic set includes at least one characteristic words; a classifier construction module 550 configured to construct a classifier based on the characteristic words in the specified characteristic set; a classifier training module 560 configured to train the classifier based on results of the binary labeling in the sample training set.

In summary, in the device for training the classifier according to the embodiment of the invention, by performing word segmentation on each sample clause in the sample training set to obtain a plurality of words, extracting a specified characteristic set from the plurality of words, and constructing a classifier based on the characteristic words in the specified characteristic set, it can solve the problem in related arts that the recognition result is not accurate when merely the birthday keyword is used to make short message class analysis. Since the characteristic words in the specified characteristic set are extracted by performing word segmentation on the sample clause including the target keyword, the classifier can accurately predict the clause including the target keyword, and thereby to achieve accurate recognition results.

Fig. 6 is a block diagram illustrating a device for training a classifier according to another exemplary embodiment. As shown in Fig. 6, the device for training the classifier includes but not limited to: a clause extraction module 510 configured to extract a sample clause including a target keyword from sample information; a clause labeling module 520 configured to perform binary labeling on the sample clause to obtain sample training set based on whether each sample clause belongs to target class; a clause word segmentation module 530 configured to perform word segmentation on each sample clause in the sample training set to obtain a plurality of words; a characteristic word extraction module 540 configured to extract a specified characteristic set from the plurality of words, wherein the specified characteristic set includes at least one characteristic words; a classifier construction module 550 configured to construct a classifier based on the characteristic words in the specified characteristic set; a classifier training module 560 configured to train the classifier based on results of the binary labeling in the sample training set.

In one embodiment, the characteristic word extraction module 540 is configured to extract the specified characteristic set from the plurality of words based on a chi-square test; or the characteristic word extraction module 540 is configured to extract the specified characteristic set from the plurality of words based on information gain.

In one embodiment, the classifier construction module 550 is configured to construct a Naive Bayes classifier with the characteristic words in the specified characteristic set, wherein the characteristic words are independent of each other in the Naive Bayes classifier.

In one embodiment, the classifier training module 560 includes: a calculation submodule 562 configured to calculate a first conditional probability that the clauses including the characteristic word belong to the target class and a second conditional probability that the clauses including the characteristic word do not belong to the target class for each characteristic word in the Naive Bayes classifier based on the results of the binary labeling in the sample training set; and a training submodule 564 configured to obtain the trained Naive Bayes classifier based on each characteristic word, the first conditional probability and the second conditional probability.

In summary, in the device for training a classifier according to the embodiment of the invention, by extracting the characteristic words from the clauses based on a specified characteristic set to be used as the characteristic set of original information, then inputting the characteristic set into the trained classifier for prediction, wherein the classifier is pre-constructed based on the characteristic words in the specified characteristic set, it can solve the problem in related arts that the recognition result is not accurate when merely the birthday keyword is used to make short message class analysis. Since the characteristic words in the specified characteristic set are extracted by performing word segmentation on the sample clause including the target keyword, the classifier can accurately predict the clause including the target keyword, and thereby to achieve accurate recognition results.

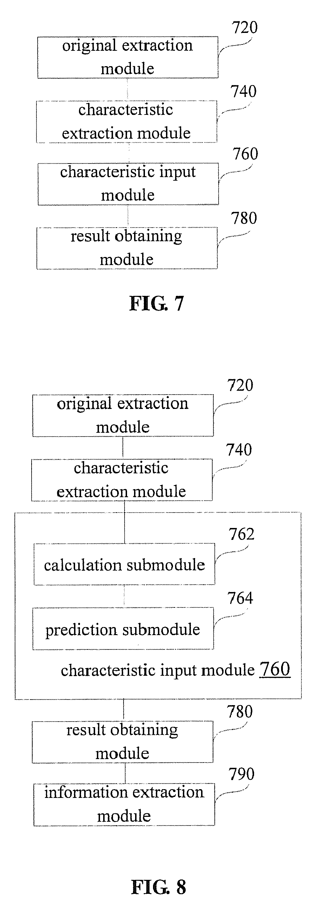

Fig. 7 is a block diagram illustrating a device for recognizing a type of information according to an exemplary embodiment. As shown in Fig. 7, the device for recognizing a type of information includes but not limited to: an original extraction module 720 configured to extract clauses including a target keyword from original information; a characteristic extraction module 740 configured to generate a characteristic set of the original information based on characteristic words in the extracted clauses which belong to the characteristic set, wherein the characteristic words in the specified characteristic set are extracted based on results of performing word segmentation on the sample clause including target keywords; a characteristic input module 760 configured to input the characteristic set of the original information into the trained classifier for prediction, wherein the classifier is pre-constructed based on the characteristic words in the specified characteristic set; a result obtaining module 780 configured to obtain a prediction result of the classifier which represents whether the original information belongs to a target class.

In summary, in the recognition device according to the embodiment of the invention, by extracting the characteristic words from the clauses based on a specified characteristic set to be used as the characteristic set of original information, then inputting the characteristic set into the trained classifier for prediction, wherein the classifier is pre-constructed based on the characteristic words in the specified characteristic set, it can solve the problem in related arts that the recognition result is not accurate when merely the birthday keyword is used to make short message class analysis. Since the characteristic words in the specified characteristic set are extracted by performing word segmentation on the sample clause including the target keyword, the classifier can accurately predict the clause including the target keyword, and thereby to achieve accurate recognition results.

Fig. 8 is a block diagram illustrating a device for recognizing a type of information according to an exemplary embodiment. As shown in Fig. 8, the device for recognizing a type of information includes but not limited to: an original extraction module 720 configured to extract clauses including a target keyword from original information; a characteristic extraction module 740 configured to generate a characteristic set of the original information based on characteristic words in the extracted clauses which belong to the characteristic set, wherein the characteristic words in the specified characteristic set are extracted based on results of performing word segmentation on the sample clause including target keywords; a characteristic input module 760 configured to input the characteristic set of the original information into the trained classifier for prediction, wherein the classifier is pre-constructed based on the characteristic words in the specified characteristic set; a result obtaining module 780 configured to obtain a prediction result of the classifier which represents whether the original information belongs to a target class.

In this embodiment, the characteristic input module includes: a calculation submodule 762 configured to calculate a first prediction probability that the original information belongs to the target class and a second prediction probability that the original information does not belong to the target class by inputting each characteristic word in the characteristic set of the original information into a trained Naive Bayes classifier; a prediction submodule 764 configured to predict whether the original information belongs to the target class based on a numeric value relationship between the first prediction probability and the second prediction probability; wherein the trained Naive Bayes classifier includes the first conditional probability and the second conditional probability of each characteristic word, the first conditional probability is a probability that the clauses including the characteristic word belong to the target class and the second conditional probability is a probability that the clauses including the characteristic word do not belong to the target class.

In this embodiment, the device further includes an information extraction module 790 configured to extract target information from the original information when it is predicted that the original information belongs to the target class.

The target information may be for example a birth date; the information extraction module 790 is then configured to extract the birth date from the original information via a regular expression; or the information extraction module 790 is configured to extract the date of receiving the original information as the birth date.

In summary, in the recognition device according to the embodiment of the invention, by extracting the characteristic words from the clauses based on a specified characteristic set to be used as the characteristic set of original information, then inputting the characteristic set into the trained classifier for prediction, wherein the classifier is pre-constructed based on the characteristic words in the specified characteristic set, it can solve the problem in related arts that the recognition result is not accurate when merely the birthday keyword is used to make short message class analysis. Since the characteristic words in the specified characteristic set are extracted by performing word segmentation on the sample clause including the target keyword, the classifier can accurately predict the clause including the target keyword, and thereby to achieve accurate recognition results.

The recognition device provided by the embodiment further includes: after predicting that the original information belongs to the target class, extracting the target information from the original information, and implementing the extraction of the target information, such as the birth date, the travel date, to provide data support for subsequently automatically generating reminders, calendar tag and so on.

Regarding the device in this embodiment, the specific ways in which respective modules perform operations have been described in detail in embodiments related to corresponding methods, and are not described in detail here.

An exemplary embodiment of the present invention provides a device for training a classifier which can implement the method for training a classifier provided in the present invention. The device includes: a processor; and a memory for storing processor-executable instructions, wherein the processor is configured to: extract a sample clause including a target keyword from sample information; perform binary labeling on the sample clause to obtain sample training set based on whether each sample clause belongs to target class; perform word segmentation on each sample clause in the sample training set to obtain a plurality of words; extract a specified characteristic set from the plurality of words, the specified characteristic set including at least one characteristic words; construct a classifier based on the characteristic words in the specified characteristic set; train the classifier based on results of the binary labeling in the sample training set.

An exemplary embodiment of the present invention provides a device for recognizing a type of information which can implement the method for recognizing a type of information provided in the present invention.. The device includes: a processor; and a memory for storing processor-executable instructions, wherein the processor is configured to: extract clauses including a target keyword from original information; generate a characteristic set of the original information based on characteristic words in the extracted clauses which belong to the characteristic set, wherein the characteristic words in the specified characteristic set are extracted based on results of performing word segmentation on the sample clause including target keywords; input the characteristic set of the original information into the trained classifier for prediction, wherein the classifier is pre-constructed based on the characteristic words in the specified characteristic set; obtain a prediction result of the classifier which represents whether the original information belongs to a target class.

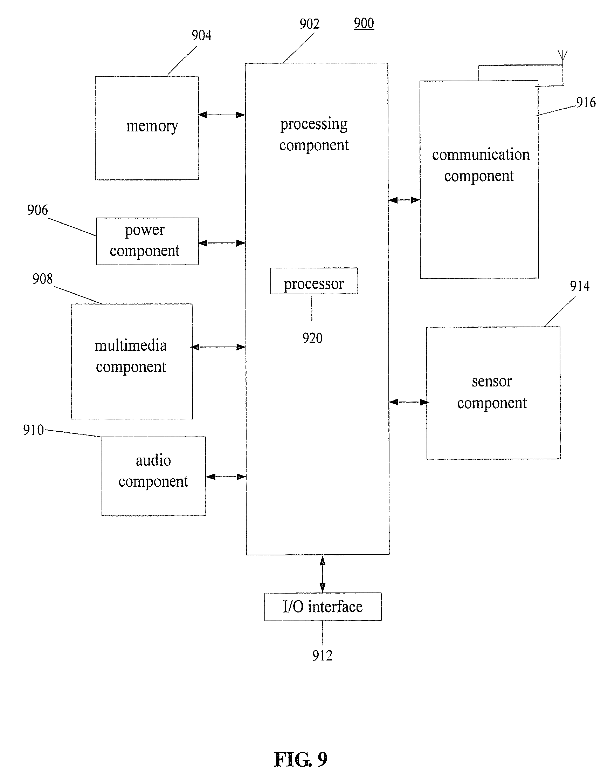

Fig. 9 is a block diagram illustrating a device 900 for training a classifier or a device for recognizing a type of information according to an exemplary embodiment. For example, the device 900 may be a mobile phone, a computer, a digital broadcast terminal, a messaging device, a gaming console, a tablet, a medical device, exercise equipment, a personal digital assistant, and the like.

Referring to Fig. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk. The power component 906 provides power to various components of the device 900. The power component 906 may include a power management system, one or more power sources, and any other components associated with the generation, management, and distribution of power for the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel.

The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the device 900 is in an operation mode, such as a photographing mode or a video mode. Each of the front camera and the rear camera may be a fixed optical lens system or have optical focusing and zooming capability.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals. The I/O interface 912 provides an interface between the processing component 902 and peripheral interface modules, the peripheral interface modules being, for example, a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components (e.g., the display and the keypad, of the device 900), a change in position of the device 900 or a component of the device 900, a presence or absence of user contact with the device 900, an orientation or an acceleration/deceleration of the device 900, and a change in temperature of the device 900. The sensor component 914 may include a proximity sensor configured to detect the presence of a nearby object without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the device 900 and other devices. The device 900 can access a wireless network based on a communication standard, such as WiFi, 2G, or 3G, or a combination thereof. In an exemplary embodiment, the communication component 916 receives a broadcast signal or broadcast associated information from an external broadcast management system via a broadcast channel. In an exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 920 in the device 900, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the inventions herein. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

**Claims**

1. A method for training a classifier, comprising:

   extracting (101) sample clauses containing a target keyword from sample information;
   performing (102) binary labeling on the sample clauses to obtain a sample training set based on whether each of the sample clauses belongs to a target class;
   performing (103) word segmentation on each sample clause in the sample training set to obtain a plurality of words;
   extracting (104) a specified characteristic set from the plurality of words, the specified characteristic set comprising at least one characteristic word;
constructing (105) a classifier based on the at least one characteristic word in the specified characteristic set; and
training (106) the classifier based on results of the binary labeling in the sample training set.

2. The method of claim 1, wherein extracting the specified characteristic set from the plurality of words comprises:

extracting (205) the specified characteristic set from the plurality of words based on a chi-square test; or
extracting (205) the specified characteristic set from the plurality of words based on information gain.

3. The method of claim 1, wherein constructing the classifier based on the characteristic words in the specified characteristic set comprises:

constructing (206) a Naive Bayes classifier with the characteristic words in the specified characteristic set, wherein respective characteristic words are independent of each other in the Naive Bayes classifier.

4. The method of claim 3, wherein training the classifier based on the results of the binary labeling in the sample training set comprises:

for each characteristic word in the Naive Bayes classifier, calculating (207) a first conditional probability that the sample clauses containing the characteristic word belong to the target class and a second conditional probability that the sample clauses containing the characteristic word do not belong to the target class based on the results of the binary labeling in the sample training set; and
obtaining (208) the trained Naive Bayes classifier based on respective characteristic words, the first conditional probability and the second conditional probability.

5. A method for recognizing a type of information, comprising:

extracting (301) clauses containing a target keyword from original information;
generating (302) a characteristic set of the original information based on characteristic words which belong to a specified characteristic set in the extracted clauses, wherein the characteristic words in the specified characteristic set are extracted based on results of performing word segmentation on sample clauses containing the target keyword;
inputting (303) the characteristic set of the original information into a trained classifier for prediction, wherein the classifier is pre-constructed based on the characteristic words in the specified characteristic set; and
obtaining (304) a prediction result of the classifier, the prediction result representing whether the original information belongs to a target class.

6. The method of claim 5, wherein inputting the characteristic set of the original information into the trained classifier for prediction comprises:

calculating (404) a first prediction probability that the original information belongs to the target class and a second prediction probability that the original information does not belong to the target class by inputting each characteristic word in the characteristic set of the original information into a trained Naive Bayes classifier;
predicting (405) whether the original information belongs to the target class based on a numeric value relationship between the first prediction probability and the second prediction probability;

wherein the trained Naive Bayes classifier comprises a first conditional probability and a second conditional probability of each characteristic word, the first conditional probability is a probability that the clauses containing the characteristic word belong to the target class and the second conditional probability is a probability that the clauses containing the characteristic word do not belong to the target class.

7. The method of claim 5 or 6, further comprising:

extracting (406) target information from the original information when it is predicted that the original information belongs to the target class.

8. The method of claim 7, wherein the target information is a birth date, and extracting the target information from the original information comprises:

extracting the birth date from the original information via a regular expression; or
extracting the date of receiving the original information as the birth date.

9. A device for training a classifier, comprising:

a clause extraction module (510) configured to extract sample clauses containing a target keyword from sample information;
a clause labeling module (520) configured to perform binary labeling on the sample clauses to obtain sample training set based on whether each of sample clauses belongs to a target class;
a clause word segmentation module (530) configured to perform word segmentation on each of sample clauses in the sample training set to obtain a plurality of words;
a characteristic word extraction module (540) configured to extract a specified characteristic set from the plurality of words, wherein the specified characteristic set comprises at least one characteristic words;
a classifier construction module (550) configured to construct a classifier based on the characteristic words in the specified characteristic set; and
a classifier training module (560) configured to train the classifier based on results of the binary labeling in the sample training set.

10. The device of claim 9, wherein
the classifier construction module (550) is configured to construct a Naive Bayes classifier with the characteristic words in the specified characteristic set, wherein the characteristic words are independent of each other in the Naive Bayes classifier.

11. The device of claim 10, wherein the classifier training module (560) comprises:

a calculation submodule (562) configured to calculate a first conditional probability that the clauses containing the characteristic word belong to the target class and a second conditional probability that the clauses containing the characteristic word do not belong to the target class for each characteristic word in the Naive Bayes classifier based on the results of the binary labeling in the sample training set; and
a training submodule (564) configured to obtain the trained Naive Bayes classifier based on each characteristic word, the first conditional probability and the second conditional probability.

12. A device for recognizing a type of information, comprising:

an original extraction module (720) configured to extract clauses containing a target keyword from original information;
a characteristic extraction module (740) configured to generate a characteristic set of the original information based on characteristic words in the extracted clause which belongs to the characteristic set, wherein the characteristic words in the specified characteristic set are extracted based on results of performing word segmentation on the sample clause containing the target keyword;
a characteristic input module (760) configured to input the characteristic set of the original information into the trained classifier for prediction, wherein the classifier is pre-constructed based on the characteristic words in the specified characteristic set; and
a result obtaining module (780) configured to obtain a prediction result of the classifier which represents whether the original information belongs to a target class.

13. The device of claim 12, wherein the characteristic input module (760) comprises:

a calculation submodule (762) configured to calculate a first prediction probability that the original information belongs to the target class and a second prediction probability that the original information does not belong to the target class by inputting each characteristic word in the characteristic set of the original information into a trained Naive Bayes classifier; and
a prediction submodule (764) configured to predict whether the original information belongs to the target class based on a numeric value relationship between the first prediction probability and the second prediction probability;

wherein the trained Naive Bayes classifier comprises the first conditional probability and the second conditional probability of each characteristic word, the first conditional probability is a probability that clauses containing the characteristic word belong to the target class and the second conditional probability is a probability that the clauses containing the characteristic word do not belong to the target class.

**14.** A device for training a classifier, comprising:

a processor (918); and
a memory (904) for storing processor-executable instructions,

wherein the processor (918) is configured to execute a method for training a classifier according to any of claims 1 to 4.

**15.** A device for recognizing a type of information, comprising:

a processor (918); and
a memory (904) for storing processor-executable instructions, wherein the processor (918) is configured to execute a method for recognizing a type of information according to any of claims 5 to 8.

101

sample clauses including a target keyword are extracted from sample
information

102

a binary labeling is performed on the sample clause to obtain sample
training set based on whether each sample clause belongs to target class

103

word segmentation is performed on each sample clause in the sample
training set to obtain a plurality of words

104

a specified characteristic set is extracted from the plurality of words,
wherein the specified characteristic set includes at least one characteristic
words

105

a classifier is constructed based on the characteristic words in the specified
characteristic set

106

the classifier is trained based on results of the binary labeling in the sample
training set

**FIG. 1**

201

a plurality of sample information including a target keyword is obtained

202

a sample clause including a target keyword is extracted from the sample information

203

a binary labeling is performed on the sample clause to obtain sample training set based on whether each sample clause belongs to the target class

204

word segmentation is performed on each sample clause in the sample training set to obtain a plurality of words

205

the specified characteristic set is extracted from the plurality of words based on a chi-square test or the information gain

206

a Naive Bayes classifier is constructed with the characteristic words in the specified characteristic set, wherein the characteristic words are independent of each other in the Naive Bayes classifier

207

a first conditional probability that clauses including the characteristic word belong to the target class and a second conditional probability that clauses including the characteristic word do not belong to the target class are calculated for each characteristic word in the Naive Bayes classifier based on the results of the binary labeling in the sample training set

208

the trained Naive Bayes classifier is obtained based on each characteristic word, the first conditional probability and the second conditional probability

**FIG. 2**

301

clauses including a target keyword are extracted from original information

302

a characteristic set of the original information is generated based on characteristic words in the extracted clauses which belong to the characteristic set, wherein the characteristic words in the characteristic set are extracted based on results of performing word segmentation on the sample clause including target words

303

the characteristic set of the original information is inputted into the trained classifier to make prediction, wherein the classifier is pre-constructed based on the characteristic words in the specified characteristic set

304

a prediction result of the classifier is obtained, which represents whether the original information belongs to a target class

**FIG. 3**

401

it detects whether the original information includes a target keyword

402

if the original information includes a target keyword, the clause including the target keyword is extracted from the original information

403

a characteristic set of the original information is generated based on characteristic words in the extracted clause which belongs to the characteristic set, wherein the characteristic words in the characteristic set are extracted based on results of performing word segmentation on the sample clause including target words

404

each characteristic word in the characteristic set of the original information is inputted into the trained Naive Bayes classifier, and a first prediction probability that the original information belongs to the target class and a second prediction probability that the original information does not belong to the target class are calculated

405

It predicts whether the original information belongs to the target class based on a numeric value relationship between the first prediction probability and the second prediction probability

406

if it predicts that the original information belongs to the target class, the target information is extracted from the original information

**FIG. 4**

```
                                                       510
          ┌─────────────────────────┐  ┌──
          │     clause extraction    │  │
          │         module           │
          └─────────────────────────┘
                       │                               520
          ┌─────────────────────────┐  ┌──
       ┌──│   clause labeling module  │  │
       │  └─────────────────────────┘
       │               │                               530
       │  ┌─────────────────────────┐  ┌──
       │  │      clause word          │  │
       │  │  segmentation module      │
       │  └─────────────────────────┘
       │               │                               540
       │  ┌─────────────────────────┐  ┌──
       │  │    characteristic word    │  │
       │  │    extraction module      │
       │  └─────────────────────────┘
       │               │                               550
       │  ┌─────────────────────────┐  ┌──
       │  │  classifier construction  │  │
       │  │         module            │
       │  └─────────────────────────┘
       │               │                               560
       │  ┌─────────────────────────┐  ┌──
       └──│     classifier training   │  │
          │         module            │
          └─────────────────────────┘
```

**FIG. 5**

```
                                                       510
          ┌─────────────────────────┐  ┌──
          │     clause extraction    │  │
          │         module           │
          └─────────────────────────┘
                       │                               520
          ┌─────────────────────────┐  ┌──
       ┌──│   clause labeling module  │  │
       │  └─────────────────────────┘
       │               │                               530
       │  ┌─────────────────────────┐  ┌──
       │  │      clause word          │  │
       │  │  segmentation module      │
       │  └─────────────────────────┘
       │               │                               540
       │  ┌─────────────────────────┐  ┌──
       │  │    characteristic word    │  │
       │  │    extraction module      │
       │  └─────────────────────────┘
       │               │                               550
       │  ┌─────────────────────────┐  ┌──
       │  │  classifier construction  │  │
       │  │         module            │
       │  └─────────────────────────┘
       │  ┌ ─ ─ ─ ─ ─ ─│─ ─ ─ ─ ─ ─ ─ ─ ─ ─ ┐
       │  │            │                     562
       │  │ ┌─────────────────────────┐  ┌── │
       │  │ │    calculation submodule  │  │  │
       │  │ └─────────────────────────┘     │
       │  │            │                     564
       │  │ ┌─────────────────────────┐  ┌── │
       └──┼─│     training submodule    │  │  │
          │ └─────────────────────────┘     │
          │   classifier training module 560 │
          └ ─ ─ ─ ─ ─ ─ ─ ─ ─ ─ ─ ─ ─ ─ ─ ─ ┘
```

**FIG. 6**

original extraction
module ⌐⌐ 720

characteristic
extraction module ⌐⌐ 740

characteristic input
module ⌐⌐ 760

result obtaining
module ⌐⌐ 780

**FIG. 7**

original extraction
module ⌐⌐ 720

characteristic
extraction module ⌐⌐ 740

calculation submodule ⌐⌐ 762

prediction submodule ⌐⌐ 764

characteristic input module 760

result obtaining
module ⌐⌐ 780

information extraction
module ⌐⌐ 790

**FIG. 8**

**FIG. 9**

Europäisches
Patentamt

European
Patent Office

Office européen
des brevets

# EUROPEAN SEARCH REPORT

Application Number

EP 16 18 2001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Erik Lux: "Feature selection for text classification with Naive Bayes", , 18 June 2012 (2012-06-18), XP055328971, Charles University, Prague Retrieved from the Internet: URL:https://is.cuni.cz/webapps/zzp/detail/122412/?lang=en [retrieved on 2016-12-14] * pages 3-4, 8, 13-15, 19-21, 30 * ----- | 1-15 | INV. G06K9/62 G06K9/00 |
| A | Steven Bird ET AL: "Chapter 6: Learning to Classify Text" In: "Natural Language Processing with Python", 1 June 2009 (2009-06-01), O'Reilly Media, XP055329037, pages 221-259, * pages: 221-222, 224-228, 242-254 * ----- | 1-15 | |
| A | MONICA ROGATI ET AL: "High-performing feature selection for text classification", CIKM'02, 1 January 2002 (2002-01-01), page 659, XP055329454, Virginia, USA DOI: 10.1145/584792.584911 ISBN: 978-1-58113-492-6 * the whole document * ----- | 1-15 | TECHNICAL FIELDS SEARCHED (IPC) G06K |

The present search report has been drawn up for all claims

| Place of search | Date of completion of the search | Examiner |
|---|---|---|
| The Hague | 15 December 2016 | Sagrebin-Mitzel, M |

EPO FORM 1503 03.82 (P04C01)